# EUROPEAN PATENT APPLICATION

(11) **EP 3 520 968 A1**
(43) Date of publication of application: **07.08.2019**
(21) Application number: 19152011.3
(22) Date of filing: 16.01.2019
(51) Int. Cl.: B25F 3/00

(54) **SYSTEM FOR MANAGING A POWER TOOL**

(30) Priority: 16.01.2018 US 201815872584
(71) Applicant: TTI (Macao Commercial Offshore) Limited, Macao (MO)
(72) Inventor: Gregorich, Brent N., Easley, SC South Carolina 29642 (US); Moylan, Julia H, Anderson, SC South Carolina 29621 (US); Smith, Isiah D., Greenville, South Carolina 29607 (US); Scott, Zachary, Pendleton, SC South Carolina 29670 (US); Causey, Brandon, Greenville, SC South Carolina 29609 (US); Johnson, Henry Thomas, Seneca, SC South Carolina 29672 (US); Patel, Shilkumar, Greenville, SC South Carolina 29615 (US); Bester, Michael, Anderson, SC South Carolina 29625 (US); Clack, Justin, Oak Grove, LA Louisiana 71263 (US); Rowe, Tyler, Anderson, SC South Carolina 29621 (US)
(74) Representative: Stevenson-Hill, Jack Patrick

(57) **Abstract**

A system for managing a power tool includes a tool implement and a tool base releasably attachable to the tool implement. The tool implement includes a working end, a memory storing an information parameter, and an electronic processor configures to transmit the information parameter. The tool base includes a base housing, an electric motor, a rotatable output shaft coupled to the electric motor, an electrical interface coupled to the electronic processor, and a controller including first and second electronic processors. Through the electrical interface, the controller is configured to receive the information parameter, by the first and second processors, as first and second data, determine whether the first data and the second data agree, and enable a function of the electric motor of the tool base in response to determining that the first data and the second data agree.

## Description

### TECHNICAL FIELD

The present invention relates to power tools and, more particularly to power tools including a power tool base couplable with a variety of power tool implements.

### BACKGROUND

Power tool systems generally utilize the rotation of an electric motor to provide useful torque for operations such as drilling, driving fasteners, and the like. Some existing power tool systems include a tool base and interchangeable tool implements for selectively attaching to the tool base. By using different tool implements, the power tool system can be adapted for different operations.

### SUMMARY OF THE INVENTION

In one aspect, the invention provides a system for managing a power tool including a tool implement and a tool base releasably attachable to the tool implement. The tool implement includes a working end that is drivable, a memory storing an information parameter of the tool implement, and an electronic processor configured to transmit the information parameter of the tool implement. The tool base includes a base housing, an (electric) motor within the base housing, a rotatable output shaft coupled to the (electric) motor and configured to drive the working end of the tool implement when the tool base is attached to the tool implement, an electrical interface, and a controller coupled to the electrical interface. The electrical interface is coupled to the electronic processor of the tool implement when the tool base is attached to the tool implement, and is configured to receive the information parameter transmitted from the electronic processor of the tool implement. The controller includes a first electronic processor and a second electronic processor, and is configured to receive, by the first (electronic) processor, the information parameter transmitted by the tool implement as first data, receive, by the second (electronic) processor, the information parameter transmitted by the tool implement as second data, determine that (or whether) the first data and the second data agree, and enable a function of the motor of the tool base in response to determining that the first data and the second data agree.

The function of the motor that is enabled may be a driving function whereby, in response to actuation of a trigger, the controller drives the motor.

In some embodiments, the information parameter is an identifier of the tool implement. In some embodiments, the tool base further includes a trigger, and the information parameter transmitted by the tool implement defines a function of the trigger. In some embodiments, the tool implement further includes a light, and the tool base further includes a light trigger configured to transmit a light control signal through the electrical interface to the tool implement. In some embodiments, the tool base further includes a control button, and the information parameter transmitted by the tool implement defines a function of the control button. In further embodiments, the control button is operable to enable a lock-on function and a lock-off function.

In some embodiments, the tool base further includes a directional switch, and the information parameter transmitted by the tool implement defines a function of the directional switch. In some embodiments, the tool base includes an implement status indicator configured to indicate a function status of the tool implement. In further embodiments, the implement status indicator further is further configured to indicate a status of the tool implement. In some embodiments, the tool base releasably attaches to the tool implement in a plurality of orientations. In some embodiments, the tool implement further includes a function select switch.

In another aspect, the invention provides a method for controlling a power tool includes receiving a tool implement by a tool base, the tool base having a motor coupled to a rotatable output shaft, the tool implement having a working end driven by the rotatable output shaft, and the tool base is releasably attachable to the tool implement. The method for controlling a power tool further includes receiving, at an electrical interface of the tool base, an information parameter transmitted from an electronic processor of the tool implement. The method further includes receiving, by a first processor of a controller of the tool base, the information parameter transmitted by the tool implement as first data. The method further includes receiving, by a second processor of the controller, the information parameter transmitted by the tool implement as second data. The method further includes determining that the first data and the second data agree and enabling, by the controller or first processor, a function of the motor of the tool base in response to determining that the first data and the second data agree.

The method may further comprise receiving, at the electrical interface of the tool base, a further information parameter transmitted from the electronic processor of the tool implement; receiving, by the first processor, the further information parameter transmitted by the tool implement as further first data; receiving, by the second processor, the further information parameter transmitted by the tool implement as further second data; determining that the further first data and the further second data do not agree; and disabling, by the controller, a function of the motor of the tool base, in response to determining that the further first data and the further second data do not agree.

In some embodiments, the method further includes disabling, by the controller (or first processor), a function of the motor of the tool base in response to determining that the first data and the second data do not agree. In some embodiments, the information parameter is an identifier of the tool implement. In some embodiments the tool base further includes a trigger, and the method further comprises defining a function of the trigger based on the information parameter. In some embodiments, the tool implement further includes a light and the tool base further includes a light trigger, and the method further comprises controlling the light based at least in part on actuation of the light trigger. In some embodiments, the tool base further includes a control button, and the method further comprises defining a function of the control button based on the information parameter. In further embodiments, the control button is operable to enable a lock-on function and a lock-off function.

In some embodiments, the tool base further includes a directional switch, and wherein the method further comprises defining a function of the directional switch based on the information parameter. In some embodiments, the tool base further includes an implement status indicator configured to indicate a function status of the tool implement. In further embodiments, the implement status indicator is further configured to indicate a status of the tool implement. In some embodiments, the tool base releasably attaches to the tool implement in a plurality of orientations. In some embodiments, the tool implement further includes a function select switch.

Any optional features discussed above in relation to one aspect of the invention may, where appropriate, be applied to another aspect of the invention.

### BRIEF DESCRIPTION OF THE DRAWINGS

FIG. 1 is a perspective view of a power tool couplable to at least three power tool implements.
FIG. 2 is a perspective view of the power tool base of FIG. 1.
FIG. 3A is a perspective view of the first power tool implement of FIG. 1.
FIG. 3B is a perspective view of the second power tool implement of FIG. 1.
FIG. 3C is a perspective view of the third power tool implement of FIG. 1.
FIG. 4 is a block diagram of the power tool of FIG. 1.
FIG. 5 is a flow diagram of a method for controlling the power tool of FIG. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

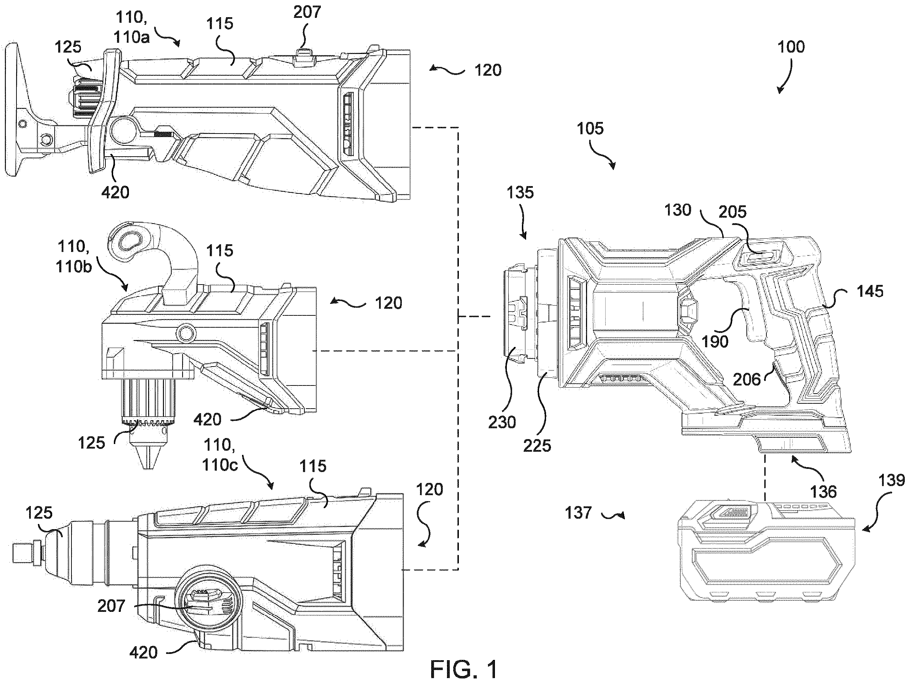

FIG. 1 illustrates a power tool 100 that includes a power tool base 105 and three power tool implements 110. The power tool base 105 is selectively couplable to the power tool implements 110, individually referred to as a first power tool implement 110a, a second power tool implement 110b, and a third power tool implement 110c. The illustrated first power tool implement 110a is a reciprocating saw implement, the illustrated second power tool implement 110b is a 90-degree drill implement, and the illustrated third power tool implement 110c is a hammer-drill implement. In other embodiments, the power tool base 105 can be selectively coupled to more or less than three power tool implements 110. In further embodiments, the power tool implement 110 can be different types of power tool implements (e.g., rotary saw implement, shear implement, grinder implement, screwdriver implement, sander implement, magnetic levitation implement, jaw implement, riveting implement, etc.). Each power tool implement 110 includes a housing 115 having an attachment end 120 that interfaces with the power tool base 105 and a working end 125. In one embodiment, the working end 125 is a chuck that selectively secures a tool (e.g., saw blade, twist drill bit, screwdriver tool bit, etc.) to the power tool implement 110.

The power tool base 105 includes a housing 130 with a power tool implement interface assembly 135 and a battery pack interface 136. The power tool implement interface assembly 135 is configured to electrically and mechanically couple to the attachment end 120 of each of the power tool implements 110. The battery pack interface 136 is configured to electrically and mechanically couple to a power tool battery pack 137. The power tool battery pack 137 includes, for example, a plurality of battery cells (not shown) within a housing 138 and a tool interface 139 for coupling to the battery pack interface 136.

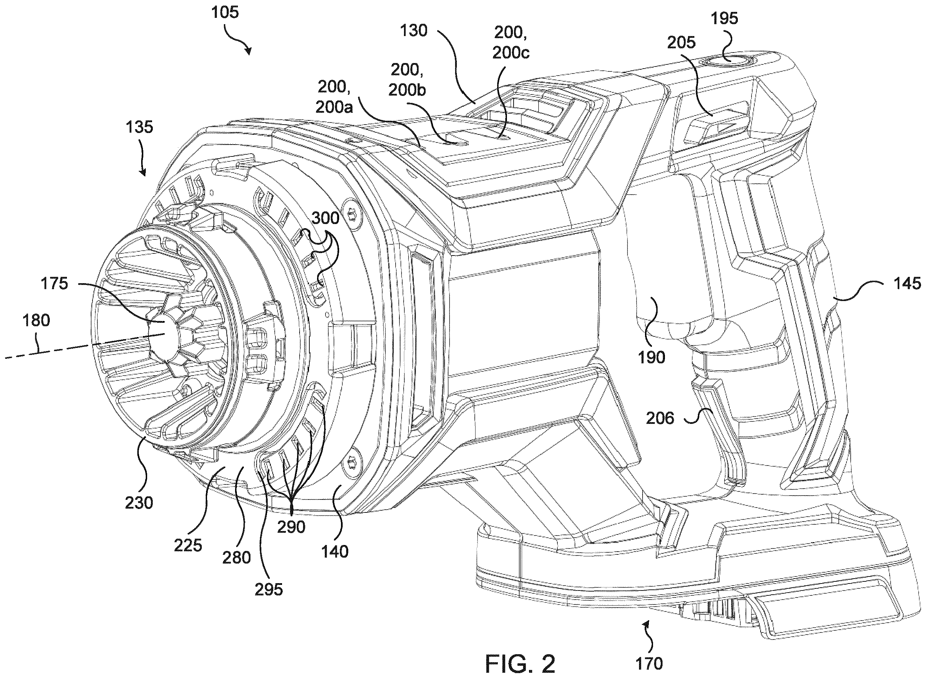

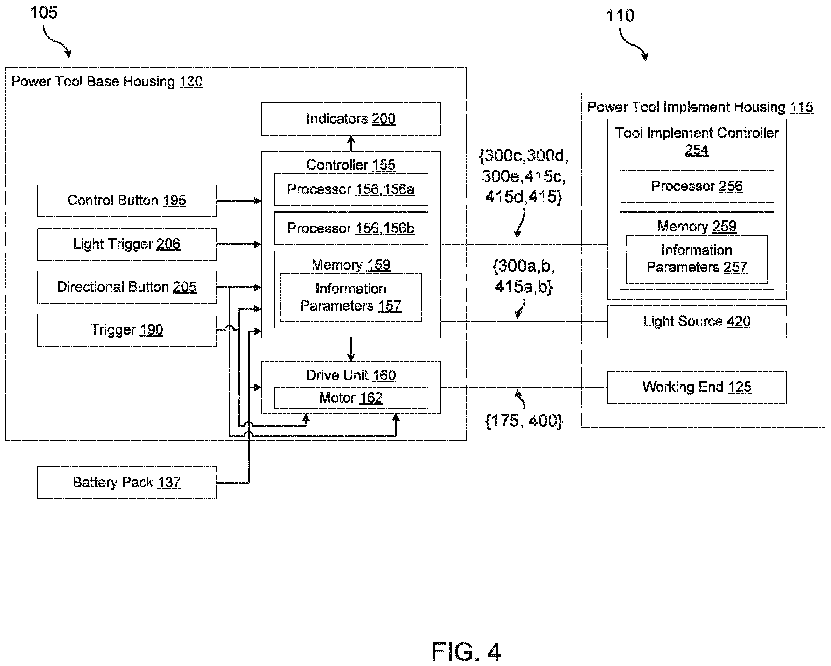

With reference to FIG. 2, the power tool implement interface assembly 135 is located adjacent a front plate or end 140 of the housing 130, and a grip portion 145 is located adjacent a rear end of the housing 130. The power tool implement interface assembly 135 includes an output spindle 175, which extends away from the front plate 140 of the housing 130, and which is rotatably driven by a drive unit 160 (see FIG. 4) about a rotational axis 180. The illustrated output spindle 175 includes teeth that extend radially outward from the rotational axis 180.

The power tool base 105 also includes implement status indicators 200 (e.g., visual indicators and/or audible indicators) that are coupled to a top surface of the housing 130. In the illustrated embodiment, the status indicators 200 are individually referred to as a light-emitting diode (LED) 200a, 200b, and 200c, respectively. The status indicators 200 provide status indications for the power tool base 105, the power tool implement 110, or both. In other embodiments, the power tool base 105 can include more or fewer than three status indicators 200.

The power tool base 105 further includes a directional actuation button 205 that is coupled to the housing 130 above the power actuation trigger 190. The directional actuation button 205 is operable to select a rotational direction of the output spindle 175. For example, when the directional actuation button 205 is in a first position, the output spindle 175 rotates in a first rotational direction (e.g., clockwise) and when the directional actuation button 205 is moved into a second position, the output spindle 175 rotates in an opposite second rotational direction (e.g., counterclockwise). The directional actuation button 205 is also positionable in an intermediate position between the first and second positions so that the trigger 190 is disabled. For example, the trigger 190 may be prevented from being mechanically or electrically actuated. In some embodiments, the directional actuation button 205 is operational with some of the power tool implements 110 and disabled for other power tool implements 110. For example, in one embodiment, the directional actuation button 205 is not operational with the reciprocating saw implement 110a, but the directional actuation button 205 is operational with the 90-degree drill implement 110b and the hammer-drill implement 110c. When the directional actuation button 205 is not operational, the output spindle 175 is permitted to rotate in a first rotational direction, but cannot be switched to permit driving of the output spindle 175 in a second operational direction. In further embodiments, the directional actuation button 205 is partially operational with some of the power tool implements 110 (e.g., the directional actuation button 205 may only be operable to select between a first rotational direction and a neutral state).

The housing 130 also supports a light actuation trigger 206 located on the grip portion 145 below the power actuation trigger 190. The light actuation trigger 206 selectively operates a light source 420 (see FIGS. 1 and 4) that is coupled to the power tool implement 110, as described in more detail below.

The illustrated tool implement interface assembly 135 includes an electrical interface portion or ring 225 and a mechanical interface portion or hub 230. The ring 225 and the hub 230 are axially fixed along the rotational axis 180 relative to the housing 130, and the hub 230 is rotatably fixed along the rotational axis 180 relative to the housing 130. However, the ring 225 is rotatably coupled to the housing 130 about the rotational axis 180. The ring 225 is also biased in a first direction (e.g., counterclockwise direction) relative to the hub 230. In other embodiments, the ring 225 can be rotatably biased in a clockwise direction relative to the hub 230. In the illustrated embodiment, an outer circumference of the ring 225 includes four grooves that are evenly spaced (e.g., spaced apart at 90 degree increments) around the outer circumference of the ring 225. In other embodiments, the ring 225 may include more or fewer than four grooves. The ring 225 also includes a front surface 280 that includes groups of interface apertures. In the illustrated embodiment, the ring 225 includes four groups of interface apertures which include electrical terminal apertures 290 (e.g. five electrical terminal apertures) and a guide aperture 295. Each of the five electrical terminal apertures 290 provides access to one of five terminal connectors 300 (e.g., resilient terminal clips). In other embodiments, the groups of interface apertures can include more or fewer than five electrical terminal apertures 290, more or fewer than five terminal connectors 300, and/or more than one guide aperture 295.

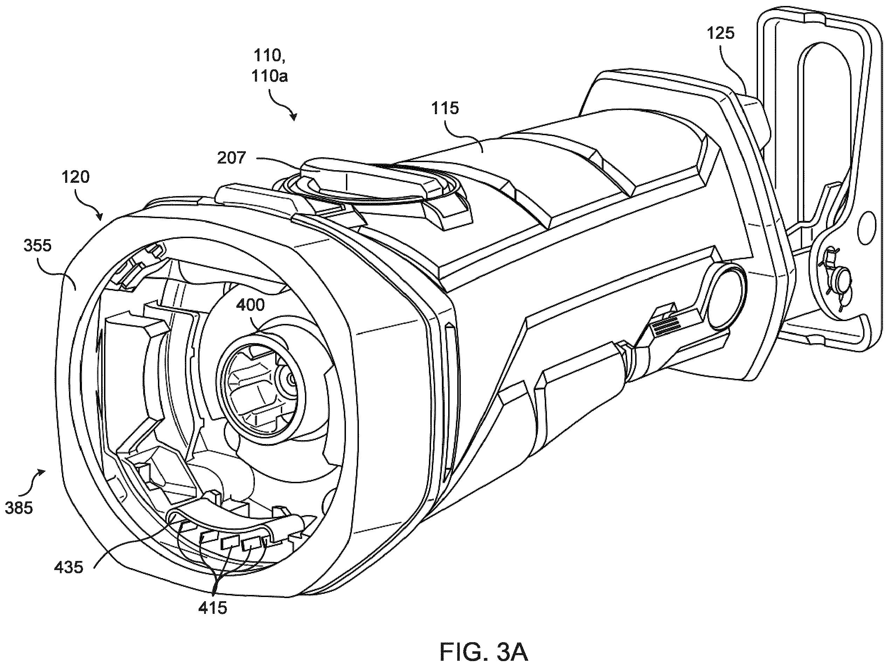

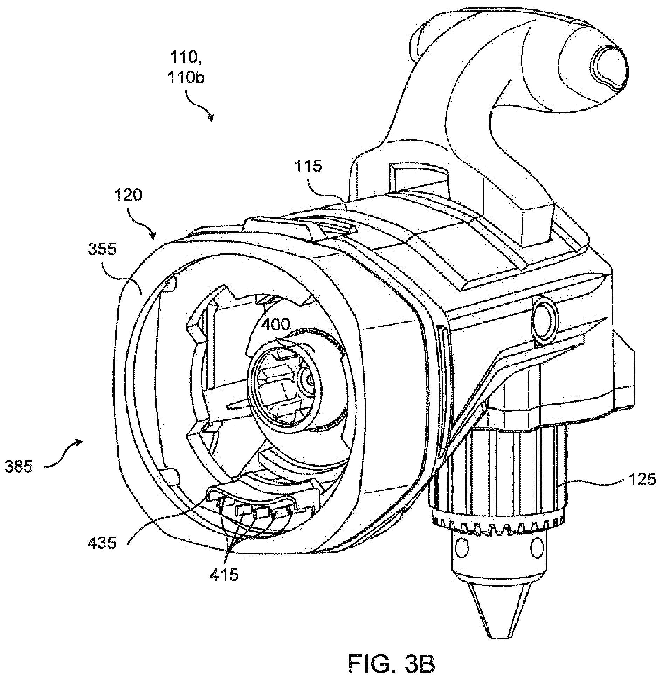

With reference to FIGS. 3A-3C, the first power tool implement 110a, the second power tool implement 110b, and the third power tool implement 110c are illustrated, respectively. Components of the power tool implements 110 having like reference numbers in FIGS. 3A-3C have similar functionality and are, accordingly, described together below.

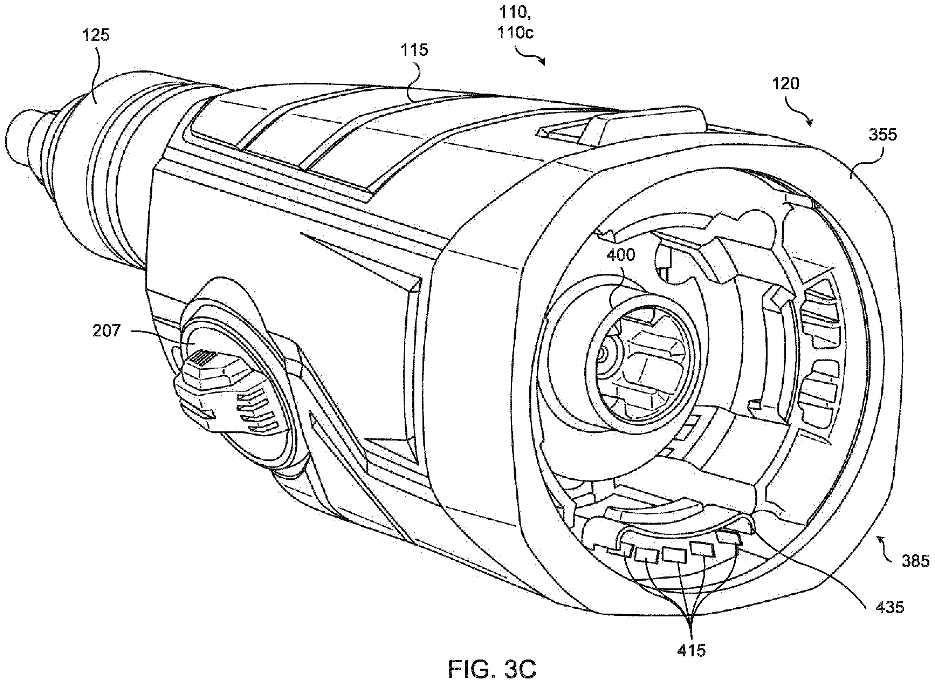

In FIGS. 3A-3C, the illustrated power tool implements 110 include an attachment end housing 355 formed at the attachment end 120. The power tool implements 110 include a power tool base interface assembly 385 positioned within a cavity partially defined by an opening of the attachment end housing 355. The power tool base interface assembly 385 includes an input spindle 400, which includes teeth that are rotatable about the rotational axis 180 (when the power tool implement 110 is coupled to the power tool base 105). The input spindle 400 is operable to drive the working end 125 of the power tool implement 110. In addition, input spindle 400 is sized and configured to engage the output spindle 175 of the power tool base 105 to transfer rotational power from the power tool base 105 to the power tool implement 110. In some embodiments, the power tool implement 110 includes a transmission configured to transfer rotational power from the input spindle 400 to the working end 125 to enable a plurality of functions of the working end 125. Two example functions include driving the working end 125 of the reciprocating saw implement 110a (FIG. 3A) in a linear fashion or in an elliptical fashion. In further embodiments, the power tool implement 110 includes a tool function switch 207 to select among the functions of the working end 125. For example, the tool function switch 207 of the reciprocating saw implement 110a (FIG. 3A) is operable to select between a "linear reciprocation" function and an "elliptical reciprocation" function, and the tool function switch 207 of the hammer-drill implement 110c (FIG. 3C) is operable to select between a "hammer-only" function, a "drill-only" function, and a "hammer-drill" function.

The interface assembly 385 of the power tool implement 110 includes electrical terminal protrusions 415. The illustrated embodiment includes five electrical terminal protrusions 415. In other embodiments, the electrical terminal protrusions 415 can include more or fewer than five terminal protrusions. In further embodiments, the types of electrical terminal protrusions 415 can be arranged in any order. The illustrated interface assembly 385 also includes a guide protrusion 435 that at least partially surrounds the electrical terminal protrusions 415.

The illustrated power tool implement 110 can be selectively coupled to the power tool base 105 in four different orientations by coupling the power tool implement interface assembly 135 with the power tool base interface assembly 385. The power tool implement 110 is fully inserted onto the power tool base 105 when the output spindle 175 engages with the input spindle 400. In one embodiment, the attachment end housing 355 can also abut the front side 140 of the power tool base 105 when the power tool implement 110 is fully inserted onto the power tool base 105. Once fully inserted, the power tool implement 110 is locked onto the power tool base 105. When the power tool implement 110 is locked onto the power tool base 105, the side surfaces of the attachment end housing 355 are substantially flush with the sides of the power tool base 105.

FIG. 4 illustrates a block diagram of the power tool 100. The housing 130 supports a controller 155 and a drive unit 160, with the controller 155 electrically coupled to the drive unit 160. The controller 155 includes two electronic processors 156 (individually, a first electronic processor 156a and a second electronic processor 156b) and an electronic memory 159 capable of storing information, such as information parameters 157. The drive unit 160 includes a motor 162 (e.g., a brushless electric motor). The drive unit 160 and the controller 155 are electrically coupled to the power tool battery pack 137 (e.g., a lithium-ion battery pack, etc.), which is selectively coupled to a bottom side 170 of the housing 130 (see FIG. 2). In some embodiments, the drive unit 160 further includes a switch bridge (not shown) controlled by the controller 155 to drive the motor 162 by selectively applying power from the power tool battery pack 137 to stator coils of the motor 162. The drive unit 160 is also directly coupled (e.g., direct drive) to the output spindle 175. In other embodiments, the drive unit 160 includes a planetary transmission positioned between and indirectly coupling the output spindle 175 and the electric motor 162. In some embodiments, various components and the processors 156 of the base housing 130 are arranged on a plurality of circuit boards, and the functions of the controller 155 are divided among the processors 156 on the separate boards. For example, in some embodiments, a first board includes the first processor 156a, which is configured to control the indicators 200, and a second board includes the second processor 156b and the switch bridge of the drive unit 160, and the second processor 156b is configured to control the drive unit 160.

Although the memory 159 is shown as separate from the processors 156, portions of or the entire memory 159 may be incorporated into the processors 156. For example, the memory 159 may comprise one or more memories, such as an EEPROM, and may further include registers within one or both processors 156, any or all of which may store program instructions or information parameters 157. For example, firmware of the power tool may be stored in the EEPROM, whereas the information parameters 157 may be stored in one or more registers of the processors 156.

The controller 155 is connected to the power actuation trigger 190. Responsive to an actuation of the power actuation trigger 190, the controller 155 controls the drive unit 160 to drive the output spindle 175. The controller 155 is further connected to the control button 195, the directional actuation button 205, and the light actuation trigger 206. For some tool implements 110, responsive to an actuation of the control button 195, the controller 155 toggles a lock-on or lock-off function of the power actuation trigger 190. For other tool implements 110, responsive to an actuation of the control button 195, the controller 155 changes the speed of the motor 162 or changes the direction of the motor 162. The information parameters 257 provided by the tool implements 110, described in further detail below, define the function of the control button 195.

Responsive to an actuation of the directional actuation button 205, the controller 155 selects a rotational direction of the output spindle 175 by selectively driving the motor 162 in the direction indicated by the directional actuation button 205. In some embodiments, responsive to an actuation of the directional actuation button 205, the controller 155 disables rotation of the output spindle 175. Further, in some embodiments, the controller 155 selects the rotational direction of the output spindle 175 based on one or more of the tool head and a transmission state within the tool head. For example, when the hammer-drill implement 110c is attached, the controller 155 may drive the output spindle 175 in a first direction, such that the working end 125 rotates in a clockwise or forward direction. By way of additional example, when the right-angle drill implement 110b is attached, the controller 155 may drive the output spindle 175 in a second direction opposite the first direction, such that the working end 125 rotates in a clockwise or forward direction. Accordingly, positioning of the directional actuation button 205 may correspond to an output direction of the working end 125, and the controller 155 may be configured to selectively drive the output spindle 175 in a direction which causes the working end 125 to rotate in the output direction corresponding to the position of the direction actuation button 205.

In some embodiments, responsive to an actuation of the tool function switch 207 or other included sensors or switches (not shown) included in the power tool implement 110, the controller 155 changes the function of one or more of the directional actuation button 205, the control button 195, the light trigger 206, and the trigger 190. For example, actuation of the tool function switch 207 changes the directional actuation button 205 to prevent reverse motor direction, changes the duration that the light source 420 is enabled in response to depression of the light trigger 206 or the trigger 190, disables the function of the control button 195 as a lock on-off selector, and the like. In some embodiments, actuation of the tool function switch 207 or other included sensors or switches changes a motor parameter, such as motor speed or motor direction. In some embodiments, the information parameters 257 provided by the tool implements 110, described in further detail below, define the function of the tool function switch 207 and other included sensors or switches.

The controller 155 is connected to the terminal connectors 300. The terminal connectors 300 include five connectors, for example, a first terminal connectors 300a is a power terminal connector, a second terminal connectors 300b is a ground terminal connector, a third terminal connectors 300c is a first communication or data terminal connector, a fourth terminal connectors 300d is a second communication or data terminal connector, and a fifth terminal connectors 300e is a clock or timer terminal connector.

Implement status indicators 200 of the power tool base 105 are coupled to the controller 155 to visually indicate a status of the power tool implement 110 coupled to the power tool base 105. For example, the first LED 200a indicates when the power tool implement 110 is coupled to the power tool base 105, and the power tool implement 110 is ready to operate. In some embodiments, status indicators 200 may visually indicate a function status of the power tool implement 110 coupled to the power tool base 105. For example, the second LED 200b indicates whether the control button 195 has been or can be depressed to enable the lock-on function of the power actuation trigger 190. The third LED 200c indicates whether the control button 195 needs to be depressed to disable the lock-out function of the power actuation trigger 190. In other embodiments, the power tool base 105 can include more or fewer than three LEDs. In further embodiments, the implement status indicators 200 can signal other statuses or function statuses of the power tool implement 110 and the power tool base 105 (e.g., the power tool implement 110 is not properly coupled to the power tool base 105, the motor 162 is overheating, the power actuation trigger 190 is actuated when the power tool implement 110 is not properly coupled to the power tool base 105, one or more functions of the power tool implement 110 have been disabled, etc.).

The power tool implement 110 includes a tool implement controller 254 supported within the housing 115. The controller 254 includes an electronic processor 256 and an electronic memory 259 storing information parameters 257. The housing 115 supports electrical terminal protrusions 415. The electrical terminal protrusions 415 include five protrusions, for example, a first terminal protrusion 415a is a power terminal protrusion, a second terminal protrusion 415b is a ground terminal protrusion, a third terminal protrusion 415c is a first communication or data terminal protrusion, a fourth terminal protrusion 415d is a second communication or data terminal protrusion, and a fifth terminal protrusion 415e is a clock or timer terminal protrusion. The clock terminal protrusion 415e provides a timer for the communication terminal protrusions 415c, 415d. In some embodiments, the clock terminal protrusions 415e is used to initiate communication, for example, in conjunction with one or more of the data terminal protrusions 415c, 415d. The power terminal protrusion 415a and the ground terminal protrusion 415b are electrically coupled to a light source 420 (see also FIG. 1) and operable to deliver power to the light source 420. The light source 420 is operable to illuminate a desired work area (e.g., the area where the tool, which is coupled to the power tool implement 110, engages a work surface). In some embodiments, the power terminal protrusion 415a and the ground terminal protrusion 415b are electrically coupled to and operable to deliver power to the tool implement controller 254. The communication terminal protrusions 415c, 415d and the clock terminal protrusion 415e are coupled to the controller 254.

Accordingly, when the power tool implement 110 is properly coupled to the power tool base 105, the terminal connectors 300a, 300b, 300c, 300d, and 300e are coupled to the terminal protrusions 415a, 415b, 415c, 415d, and 415e, respectively. The terminal connectors 300a, 300b are operable to transmit power to the terminal protrusions 415a, 415b. Responsive to an actuation of the light actuation trigger 206, the controller 155 transmits power to the light source 420. The communication terminal connectors 300c, 300d are operable to transmit and receive data with the communication terminal protrusions 415c, 415d. The fifth terminal connector is operable to transmit a clock signal to the clock terminal protrusion 415e. The communication terminal protrusions 415c, 415d are operable to convey information parameters 257 from the controller 254 of the specific power tool implement 110 to the controller 155 of the power tool base 105.

For example, the information parameters 257 can include one or more of an identifier of the power tool implement 110, data defining whether the working end 125 of the specific power tool implement 110 can be rotated in two directions in which the directional actuation button 205 would be operable, data defining whether the specific power tool implement 110 is operable with the lock-off function that is disabled by the control button 195, data defining whether the specific power tool implement 110 is operable with the lock-on function that is enabled by the control button 195, data defining the function of the control button 195 as a lock on-off button, a motor speed selector, or a motor direction selector, and a status of the power tool implement 110. In addition, in some embodiments, the information parameters 257 includes current limits, bit package or serial communication, data defining functionality of the power actuation trigger 190, data defining functionality of the light actuation trigger 206, data defining a motor stall duration threshold after which the motor drive 160 is disabled, and the like.

As an example of data defining functionality of the power actuation trigger 190, the information parameters 257, in some embodiments, defines the power actuation trigger 190 to be either a variable speed trigger or an on-off, binary trigger. When functioning as a variable speed trigger, the controller 155 drives the motor 162 with power or at a speed proportional to the amount that the trigger is depressed. For example, when the trigger is depressed 10%, the controller 155 drives the motor 162 with a pulse width modulation (PWM) signal having a 10% duty cycle, but when the trigger is depressed 75%, the controller 155 drives the motor 162 with a PWM signal having a 75% duty cycle. The particular depression percentages and corresponding duty cycles are merely examples, and different scaling is used in other embodiments. When functioning as an on-off binary trigger, the controller 155 drives the motor 162 when the power actuation trigger 190 is depressed and without variation based on the amount of depression, and the controller 155 ceases driving the motor 162 when the power actuation trigger 190 is not depressed. In some embodiments, one or more of the power tool implements 110a-110c indicate in their respective information parameters 257 that the power actuation trigger 190 is a variable speed trigger. In some embodiments, other power tool implements 110, such as a grinder or circular saw implement, indicate in their respective information parameters 257 that the power actuation trigger 190 is an on-off binary trigger.

In some embodiments, prior to or upon receiving the power tool implement 110 by the power tool base 105, one or more functions of the drive unit 160 are disabled as a default. For example, the directional actuation button 205 may be operable to select a rotational direction of the output spindle 175, but depression of the power actuation trigger 190 into the grip portion 145 is ignored by the controller 155 and the drive unit 160 does not rotate the output spindle 175 until a later enabling of a driving function of the motor 162 of the drive unit 160. In some embodiments, prior to or upon receiving the power tool implement 110 by the power tool base 105, one or more functions of the drive unit 160 are enabled as a default. For example, the driving function of the motor 162 of the drive unit 160 may be enabled by default and depression of the power actuation trigger 190 into the grip portion 145 is used by the controller 155 to control driving of the drive unit 160 until a later disabling of the driving function.

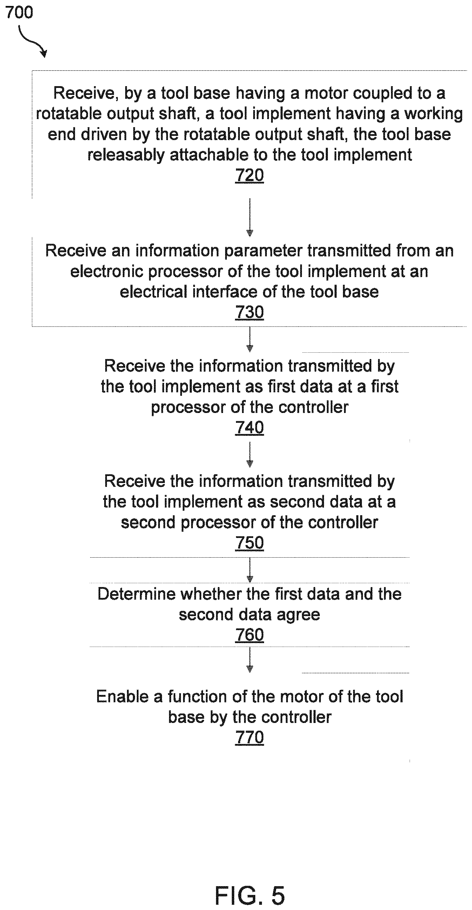

FIG. 5 illustrates a flow diagram 700 of a method for controlling the power tool 100. In block 720, the power tool implement 110 is received by the power tool base 105. The power tool implement 110 is fully inserted onto the power tool base 105 resulting in the output spindle 175 engaging with the input spindle 400 and the terminal connectors 300 coupling with the terminal protrusions 415. Accordingly, the motor 162 of the power tool base 105 is mechanically coupled to the working end 125 of the power tool implement 110, and the controller 155 is electrically coupled to the controller 254 and the light source 420.

In block 730, the controller 155 receives one or more of the information parameters 257 (e.g., an identifier of the tool implement 110) from the controller 254 at the terminal connectors 300c, 300d of the electrical interface 225. For example, the controller 254 may transmit the information parameter 257 responsive to the power tool implement 110 being received by the power tool base 105, or may transmit the information 275 responsive to an information parameter request from the controller 155. In block 740, the first processor 156a receives the information parameter 257 as first data. In block 750, the second processor 156b receives the information parameter 257 as second data.

In block 760, the controller 155 determines whether the first data and the second data agree. For example, the first processor 156a and the second processor 156b may compare the first data and second data to determine whether the first data and second data match (in other words, whether the first data and second data are the same). As an example, the first processor 156a outputs the first data to the second processor 156b, which compares the first data and second data to determine whether the first data and second data match. In some embodiments, in addition or instead, the second processor 156b outputs the second data to the first processor 156a, which compares the first data and the second data to determine whether they match. In still further embodiments, one or both of the first processor 156a and the second processor 156b output to the other of the first processor 156a and second processor 156b other data indicative of the first data and second data, and the other data is analyzed by the receiving processor(s) to determine whether the first data and second data match.

In block 770, in the case that the controller 155 determines that the first data and the second data agree in block 760, the controller 155 enables a function of the motor 162. For example, in block 770, the controller 155 enables a driving function of the motor 162 (e.g., the ability to drive the motor 162 in response to depression of the power actuation trigger 190). The driving function may be initially disabled (e.g., at the time the implement 110 is attached to the power tool base 105). However, in response to determining that the first data and the second data agree in block 760, the driving function is enabled in block 770. After the driving function of the motor 162 is enabled, the controller 155 drives the motor 162 in response to depression of the power actuation trigger 190 (functioning, for example, as a variable speed trigger or an on-off binary trigger). The power tool base 105 can then be operable with the selected power tool implement 110. In particular, once the power actuation trigger 190 is depressed into the grip portion 145, the controller 155 controls the drive unit 160 to drive the output spindle 175 to rotatably engage the input spindle 400 and drive the working end 125.

In some embodiments, instead of determining that the first data and the second data agree in block 760, the controller 155 determines that the first data and second data do not agree in block 760. For example, one or both of the first processor 156a and the second processor 156b may compare the first data and second data and determine that the first data and second data do not match. In these instances, the controller 155 disables a function of the motor 162, which may include the controller 155 actively changing a function to a disabled state or, when the function is already disabled (e.g., by default), the controller 155 may passively maintain the function in the disabled state. For example, a driving function of the motor 162 (e.g., the ability to drive the motor 162 in response to depression of the power actuation trigger 190) may be initially enabled (e.g., by default); however, in response to determining that the first data and the second data do not agree in block 760, the driving function is disabled in block 770. While the driving function of the motor 162 is disabled, the controller 155 prevents driving of the motor 162, for example, by not providing driving signals to the motor 162 despite depression of the power actuation trigger 190 or by applying a braking function to the motor 162. In another example, the driving function of the motor 162 is initially disabled by default. Then, in response to determining that the first data and the second data do not agree in block 760, the controller 155 maintains the driving function in a disabled state.

The controller 155 may store the one or more information parameters 257 in the memory 159 as the one or more information parameters 157, for example, during one or more of blocks 720, 730, and 740 of the flow diagram 700, or upon determining that the first data and the second data match in block 760.

In some embodiments, the flow diagram 700 is executed repeatedly or continuously by the power tool 100. For example, the controller 254 of the power tool implement 110 may periodically transmit information parameters 257 to the controller 155 of the power tool base 105 when the power tool implement 110 is coupled to the power tool base 105. In some embodiments, each time the one or more information parameters 257 are received by the power tool base 105, the blocks 730-770 of the flow diagram 700 are executed using the one or more information parameters 257 most recently received.

In further embodiments, the controller 155 may not disable a function of the drive unit 160 immediately upon determining that the first data and second data do not match, but, rather, may request that the one or more information parameters 257 be retransmitted within a predetermined time. Upon retransmission, the controller 155 returns to block 730 and receives the (retransmitted) one or more information parameters 257. In the case where, in block 760, the first data and second data fail to match again (or a predetermined number of times), the controller disables the function of the motor 162 in block 770.

Although the invention has been described with reference to certain preferred embodiments, variations and modifications exist within the scope of one or more independent aspects of the invention as described.

## Claims

1. A system for managing a power tool, comprising:
a tool implement including
a working end that is drivable,
a memory storing an information parameter of the tool implement, and
an electronic processor configured to transmit the information parameter of the tool implement; and
a tool base releasably attachable to the tool implement and including
a base housing,
a motor within the base housing,
a rotatable output shaft coupled to the motor and configured to drive the working end of the tool implement when the tool base is attached to the tool implement,
an electrical interface coupled to the electronic processor of the tool implement when the tool base is attached to the tool implement, the electrical interface configured to receive the information parameter transmitted from the electronic processor of the tool implement, and
a controller coupled to the electrical interface and including a first electronic processor and a second electronic processor, the controller configured to:
receive, by the first electronic processor of the controller, the information parameter transmitted by the tool implement as first data,
receive, by the second electronic processor of the controller, the information parameter transmitted by the tool implement as second data,
determine whether the first data and the second data agree, and
enable a function of the motor of the tool base in response to determining that the first data and the second data agree.

2. The system of claim 1, wherein the function of the motor that is enabled is a driving function whereby, in response to actuation of a trigger, the controller drives the motor.

3. The system of claim 1 or 2, wherein the information parameter is an identifier of the tool implement.

4. The system of any one of claims 1 to 3, wherein the tool base further includes a trigger, and wherein the information parameter transmitted by the tool implement defines a function of the trigger.

5. The system of any one of claims 1 to 4, wherein the tool implement further includes a light, and wherein the tool base further includes a light trigger configured to transmit a light control signal through the electrical interface to the tool implement.

6. The system of any one of claims 1 to 5, wherein the tool base further includes a control button, and wherein the information parameter transmitted by the tool implement defines a function of the control button, and, optionally wherein said control button is operable to enable a lock-on function and a lock-off function.

7. The system of any one of claims 1 to 6, wherein the tool base further includes a directional switch, and wherein the information parameter transmitted by the tool implement defines a function of the directional switch.

8. The system of any one of claims 1 to 7, wherein the tool base includes an implement status indicator configured to indicate a function status of the tool implement.

9. The system of any one of claims 1 to 8, wherein the tool base is releasably attachable to the tool implement in a plurality of orientations.

10. The system of any one of claims 1 to 9, wherein the tool implement further includes a function select switch.

11. A method for controlling a power tool, comprising:
receiving, by a tool base having a motor coupled to a rotatable output shaft, a tool implement having a working end driven by the rotatable output shaft, the tool base releasably attachable to the tool implement;
receiving, at an electrical interface of the tool base, an information parameter transmitted from an electronic processor of the tool implement;
receiving, by a first processor of a controller of the tool base, the information parameter transmitted by the tool implement as first data;
receiving, by a second processor of the controller, the information parameter transmitted by the tool implement as second data;
determining that the first data and the second data agree; and
enabling, by the controller, a function of the motor of the tool base, in response to determining that the first data and the second data agree.

12. The method of claim 11, further comprising
receiving, at the electrical interface of the tool base, a further information parameter transmitted from the electronic processor of the tool implement;
receiving, by the first processor, the further information parameter transmitted by the tool implement as further first data;
receiving, by the second processor, the further information parameter transmitted by the tool implement as further second data;
determining that the further first data and the further second data do not agree; and
disabling, by the controller, a function of the motor of the tool base, in response to determining that the further first data and the further second data do not agree.

13. The method of claim 11 or 12, wherein the information parameter is an identifier of the tool implement.

14. The method of any one of claims 11 to 13, wherein the tool base further includes at least one of:
a trigger,
a control button,
a directional switch, and
an implement status indicator configured to indicate a function status of the tool implement; and
wherein the method further comprises:
defining a function of the trigger based on the information parameter if the tool base includes a trigger;
defining a function of the control button based on the information parameter if the tool base includes a control button; and
defining a function of the directional switch based on the information parameter if the tool base includes a directional switch; and, optionally, wherein, if the tool base includes a control button, the control button is operable to enable a lock-on function and a lock-off function.

15. The method of any one of claims 11 to 14, wherein the tool implement further includes a light and the tool base further includes a light trigger, and the method further comprises controlling the light based at least in part on actuation of the light trigger.
